# EUROPEAN PATENT SPECIFICATION

(11) **EP 0 417 624 B1**
(45) Date of publication and mention of the grant of the patent: **02.04.1997**
(21) Application number: 90117052.2
(22) Date of filing: 05.09.1990
(51) Int. Cl.: G02F 1/153, G02F 1/155

(54) **Electrochromic window with polymer layer**
Elektrochromes Fenster mit Polymerschicht
Fenêtre électrochrome avec une couche de polymère

(30) Priority: 13.09.1989 US 406477; 29.09.1989 US 415001; 24.11.1989 US 440832
(43) Date of publication of application: 20.03.1991
(73) Proprietor: PPG INDUSTRIES, INC., Pittsburgh Pennsylvania 15272 (US)
(72) Inventor: Singleton, David Ellis, Natrona Heights, Pennsylvania 15065 (US); Ho, Kuo-Chuan, Pittsburgh, Pennsylvania 15237 (US); Greenberg, Charles Bernard, Murrysville, Pennsylvania 15668 (US); Rukavina, Thomas George, Lower Burrell, Pennsylvania 15068 (US); Slobodnik, John Benedict, New Kensington, Pennsylvania 15068 (US)
(74) Representative: Fleischer, Holm Herbert

(56) References cited:
- EP-A- 0 038 165
- EP-A- 0 400 797
- GB-A- 2 014 326
- US-A- 4 109 431
- US-A- 4 388 522
- US-A- 4 768 865
- PATENT ABSTRACTS OF JAPAN, vol. 9, no. 44 (P-337)[1767], 23rd February 1985; & JP-A-59 184 328
- PATENT ABSTRACTS OF JAPAN, vol. 8, no. 206 (E-267), 20th September 1984, & JP- A-59 090 966

## Description

This invention relates generally to the art of electrochromic cells, and more particularly to the art of transparent electrochromic windows with polymeric ion-conducting layers.

Electrochromic devices have been proposed for use in alpha-numeric display panels in items such as digital watches, calculators and the like. The electrochromic image formed by the application of an appropriate voltage to an electrochromic cell persists for a useful period after the activating voltage is discontinued, generally until it is erased by application of an appropriate voltage of reversed polarity.

As voltage is applied across the two electrodes, ions are transported through the ion conducting layer. When the electrode directly adjacent to the electrochromic film is the cathode, application of a DC current causes darkening of the film, referred to as coloration. Reversing the polarity causes reversal of the electrochromic properties and the film reverts to its high transmittance state, referred to as bleaching.

In US-A-4,768.865 an electrochromic transparency comprising an electrochromic film and an ion-conductive layer disposed between a pair of electrodes is disclosed wherein the optical properties and electrochromic efficiency are improved by means of a metal grid electrode.

From Patent Abstracts of Japan vol. 9, no. 44 (P-337) [1767] February 23, 1985 a symmetrical electrochromic cell having two electrochromic material layers, two transparent electrode layers and an ion-conductive layer is known.

The object of the present invention is to speed the coloration/bleaching operations of an electrochromic cell and to make them more uniform over the entire surface of the cell.

This object is solved by a laminated transparency in form of an electrochromic cell having variable transmittance in response to an electric field comprising:
a) a first transparent substrate (14);
b) a second transparent substrate (24) which in combination with said first transparent substrate (14) forms the walls of the electrochromic cell;
c) an electroconductive electrode member (16);
d) a transparent electrochromic film (18) in contact with said electroconductive electrode member (16);
e) a preformed, preconditioned ion-conductive copolymer sheet (26) which is prepared from 2-acrylamido-2-methylpropane sulfonic acid or a mixture of sulfonic acid monomer and hydrophilic acrylate monomer, in contact with said electrochromic film (18);
f) a metal grid counter electrode (22) in contact with said ionconductive polymer sheet (26)
characterized by
g) a current conducting means (32) having longitudinally extending bus bars (34) connected to a common terminal bus bar (36) in contact to said electroconductive electrode (16) at predetermined positions to more uniformly distribute current through said electrode (16).

Thus The present invention provides an electrochromic cell which is transparent, and which darkens and bleaches completely at an applied electrical potential of about 1.0 volt or less, positive and negative respectively. The electrochromic cell of the present invention comprises a preformed sheet of polymer electrolyte, preconditioned to optimum water content, laminated between two transparent cell walls, the perimeter of the laminated cell being sealed with a moisture vapor barrier to maintain the optimum polymer electrolyte/water ratio. The polymer sheet is prepared by dissolving suitable acidic monomers such as acrylamido methyl propane sulfonic acid or ethylene sulfonic acid with hydrophilic comonomers such as poly(ethylene oxide) dimethacrylate, ethoxytriethylene glycol methacrylate, ethylene oxide-dimethyl siloxane acrylates, hydroxypropyl or ethyl acrylate in water, casting the reaction solution between two plates of glass and curing with ultraviolet radiation in the presence of an initiator such as benzoin methyl ether. Electric current passing through the film electrode encounters lateral electrical resistance that results in a non-uniform current density between the film electrode and the counter electrode, which in turn causes a gradient in the transparency as it switches from one transmittance state to the other. The improvement of the present invention provides a more uniform change between transmittance states. This distribution of electrical charge provides a more uniform current density between the film electrode and the counter electrode, resulting in a more uniform change in the transmittance level of the transparency.

Figure 1 is a plan view of an electrochromic transparency according to the present invention.

Figure 2 is a view through line 2-2 in Figure 1.

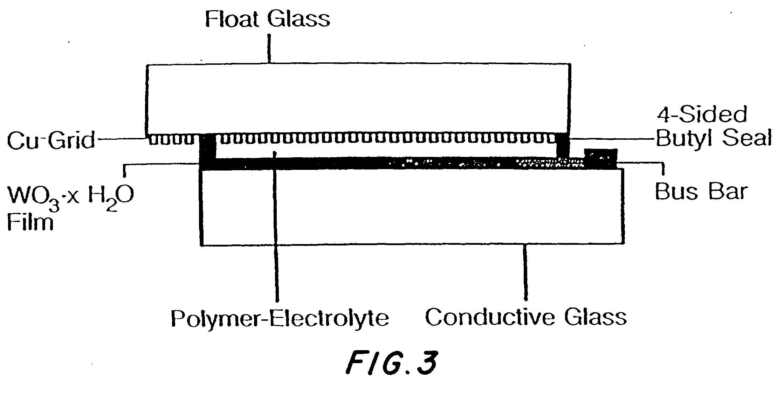

Figure 3 illustrates a cross-section of a laminated and sealed electrochromic window in accordance with the present invention.

### Description of the Preferred Embodiments

Conventional electrochromic cells comprise a thin film of a persistent electrochromic material, i.e. a material responsive to the application of an electric field of a given polarity to change from a high-transmittance, non-absorbing state to a lower-transmittance, absorbing or reflecting state and remaining in the lower-transmittance state after the electric field is discontinued, preferably until an electric field of reversed polarity is applied to return the material to the high-transmittance state. The electrochromic film is in ion-conductive contact, preferably direct physical contact, with a layer of ion-conductive material. The ion-conductive material of the present invention is a preformed, preconditioned polymer sheet. The electrochromic film and ion-conductive film are disposed between two electrodes.

While the following description relates specifically to tungsten oxide electrochromic films and 2-acrylamido-2-methylpropanesulfonic acid based polymer electrolyte films, it is to be understood as applying to electrochromic cells comprising any suitable electrochromic compound and ion-conducting polymer composition.

The polymer electrolyte sheet may be formed by any conventional method such as casting or extrusion. The polymer electrolyte sheet is preferably preconditioned to a desired moisture content, preferably a water/monomer molar ratio in the range of 1.5-3.9:1. The preconditioning to obtain optimum moisture content is preferably accomplished in a conditioning atmosphere at 23°C and 58 percent relative humidity. The free polymer electrolyte sheet is conditioned to equilibrium at the optimum water content, preferably about 20 percent for ambient temperature operation. For use at higher temperatures, lower water contents may be preferred. The polymer electrolyte sheet may be conditioned in either a flat position or conformed to a selected curved shape if the laminated final product is to be of curved shape.

The present invention involves the use of a metal mesh as the counter electrode, allowing transparency while providing uniform rapid charge distribution over a large surface area and participating in a balancing half-cell reaction at a lower potential which prevents electrolysis of water and concurrent gas evolution which would otherwise occur. Instead of the hydrolysis of water at the counter electrode, the balancing half-cell reaction in response to the electrochromic transition of tungsten oxide is the oxidation or reduction of the metal of the metal grid counter electrode which does not produce gas which can form bubbles and decrease the optical quality of the device.

In a preferred embodiment of the present invention, the electrochromic cell is a transparent laminate comprising two glass substrates. One electrode of the cell comprises one of the glass substrates coated with an electroconductive film, preferably tin oxide having a resistivity of about 25 ohms per square or less. The electrochromic film, preferably tungsten oxide, is deposited over the conductive film, preferably by evaporation or sputtering to a preferred thickness of about 1000 to 4000 Angstroms. The second glass substrate is preferably uncoated glass.

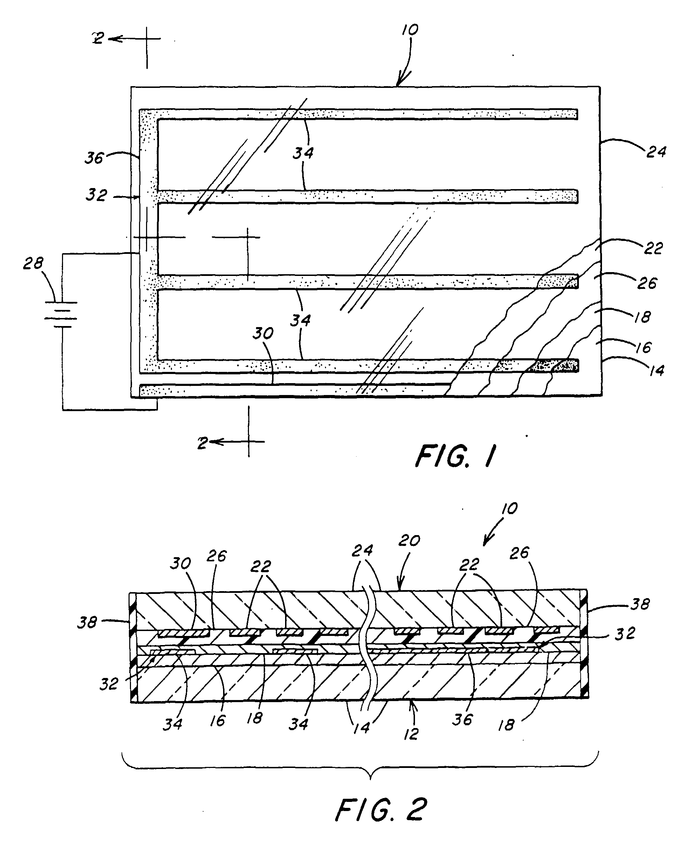

To form the counter electrode, a metal grid is disposed adjacent to the second glass substrate. A preferred metal for the grid is copper. For optimum optical properties, the copper grid preferably has line widths on the order of about 0.0635 millimeter (0.0025 inch) and line spacing of about 8 lines per centimeter (about 20 lines per inch). The metal grid pattern may be square or rectangular, but is preferably a pattern of interconnected circles for optimum optical properties as disclosed in U.S.-A-4,772,760. Preferred metal grids are produced by electroforming as disclosed in U.S.-A-4,762,595. The electrochromic film/conductive film coated glass plate and the uncoated glass plate with adjacent metal grid counter electrode may be spaced about 0.76 millimeter (0.030 inch) apart, but preferably about 0.51 millimeter (0.020 inch) or less. Disposed in this space is the preformed, preconditioned ion-conductive polymer sheet of the present invention. Preferred ion-conductive polymers include homopolymers of 2-acrylamido-2-methylpropanesulfonic acid and copolymers thereof with vinyl sulfonic acid. Electrical connections to the electrochromic film and metal grid counter electrode are preferably made by means of a bus bar arrangement shown in Figures 1 and 2. Referring to Figures 1 and 2, in a preferred embodiment of the present invention, an electrochromic cell similar to that disclosed in U.S-A-4,768,865 to Greenberg et al., is incorporated into a transparent laminate 10. One electrode 12 of the electrochromic cell comprises a glass substrate 14 coated with an electroconductive film 16, preferably tin oxide, having a sheet resistance of about 25 ohms per square or less. An electrochromic film 18, preferably tungsten oxide, is deposited over the conductive film 16, preferably by evaporation or sputtering, to a preferred thickness of about 1000 to 4000 Angstroms. In the particular embodiment illustrated in Figures 1 and 2, the counter electrode 20 of the cell is a metal grid 22 disposed adjacent to a second, uncoated glass substrate 24. A preferred metal for the grid is copper. The metal grid pattern may be square or rectangular but for optimum optical properties, is preferably in a pattern of interconnected circles as disclosed in U S 4,772,760. Disposed between the electrochromic film 18 and metal grid 22 is an ion-conductive material 26, preferably an ion-conductive polymer as known in the art. Preferred ion-conductive polymers include 2-acrylamido-2-methylpropanesulfonic acid homopolymers (AAMPS) and AAMPS polymers with vinyl sulfonic acid. Preferably, the metal grid counter electrode 22 is embedded in the ion-conductive polymer 26 at the interface of polymer and the uncoated glass substrate 24. Electrical current from a power source 28 (shown only in Figure 1) is provided to the metal grid 22 by a bus bar 30 along an edge of the laminate 10.

The metal grid 22 has a low electrical resistance that rapidly provides a uniform electrical charge distribution throughout the counter electrode 20. In the electrochromic cell as described in US-A-4 768 865 however, current passing through the thin electroconductive film 16 encounters lateral electrical resistance which decreases the speed and uniformity of the charge distribution throughout the film 16 and adjacent electrochromic film 18. As a result, the current density between the films 16 and 18 and the grid 22 is non-uniform and during the bleaching and coloration operations, there is a gradient in the transmittance of the laminate 10 in the direction of the current flow through the film 16. In other words, when the laminate 10 is transparent, i.e. the electrochromic film 18 is in a high transmissive state, and is energized such that the film 16 is the cathode, the portions of the electrochromic film 18 closest to the power source connection to the film 16 begin to darken while the portions of electrochromic film 18 furthest from the power source connection to film 16 initially remains transparent. Conversely, when the laminate 10 is dark, i.e. the electrochromic film 18 is in a low transmissive state, and energized with film 16 as the anode, the bleaching of the electrochromic film 18 initially occurs in the vicinity of the power source connection to the film 16 while remaining portions of the electrochromic film 18 initially remain colored. The operation eventually reaches equilibrium so that the electrochromic film 18 is uniformly colored or bleached and the laminate 10 has a uniform transmissivity.

In order to speed the coloration/bleaching operations and make them more uniform over the entire surface of the laminate 10, the present invention utilizes multiple power source connections to the film 16 which more uniformly distribute current throughout the film 16 by reducing the current path through the film 16, i.e. the distance the current must travel through the film 16 to establish the required current density between the film 16 and the grid 22 for the coloration/bleaching operations. Although not limiting in the present invention, in the particular embodiment illustrated in Figures 1 and 2 the laminate 10 includes a power distribution arrangement 32 having longitudinally extending bus bars 34 connected to a common terminal bus bar 36. The power source 28 is connected to the terminal 36 and current flows through the bus bars 34 to the film 16 to reduce the current path and more evenly distribute the charge throughout the film 16. The particular pattern shown in Figures 1 and 2 is rectangular but it is obvious that other patterns may be used, for example, circular, diamond shaped, or a corporate logo. The bus bars 34 and terminal 36 may be any electroconductive material and preferably a metal foil that is secured to the surface of the glass sheet 14 or an electroconductive ceramic frit that can be fired onto the glass surface prior to or after coating the glass with the film 16. Care must be taken to insure that the bus bars and terminal do not react with the other components of the laminate. In particular, it has been found that AAMPS ion-conductive material 26 may attack the silver in a silver containing ceramic bus bar arrangement 32 through the electrochromic film 18 and degrade the bus bars 34 and terminal 36. This condition can be remedied by insulating the bus bars and terminal from the ion-conductive material 26, for example with an overcoat (not shown), such as but not limited to silicon oxide. Referring to the embodiment of the invention shown in Figures 1 and 2, the overcoat is applied only over the bus bar arrangement so that the bus bars 34 are still in electrical contact with the electroconductive film 16 but will not react with the ion-conductive material 26 through the electrochromic film 18 and overcoat.

The cell voltage in accordance with the present invention is sufficiently low so that the following electrolysis reactions of water, with concurrent evolution of gas which can form bubbles, do not occur:

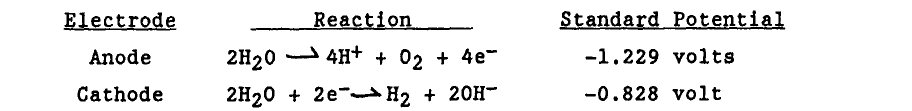

Instead, the metal grid counter electrode participates in balancing half-cell reactions at lower absolute potentials. For a copper grid counter electrode, the following balancing half-cell reactions preferentially occur:

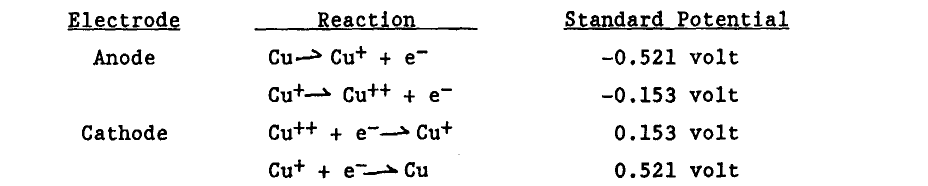

The polymer electrolyte sheet is laminated between the two transparent electrode bearing plies under typical autoclave laminating conditions, preferably about 200 to 225°F (about 93 to 107°C) and about 150 pounds per square inch pressure. Although conventional polymer interlayers such as polyvinyl butyral have to be embossed to allow air egress, and very dry to prevent bubble formation, the preconditioned polyelectrolyte sheet of the present invention is readily laminated without embossing and without bubble formation, even with water content of 20 percent.

The perimeter of the electrochromic cell is sealed in accordance with a preferred embodiment of the present invention with a moisture vapor barrier to maintain the desired water content in the polymer electrolyte. The moisture vapor barrier preferably comprises a polymer sealant which is moisture vapor impervious. Preferred polymer sealants have a moisture vapor transmission rate less than 50 grams per square meter per 24 hours per 0.0254 millimeter (mil) of thickness at about 40°C and 90 to 95 percent relative humidity, preferably less than 20 grams per square meter per 24 hours per 0.0254 mm (mil). A preferred sealant material is butyl rubber. The butyl rubber may be applied in the form of a cold-flowable bead which is applied by pressure along the edges of the cell, across the edge of the polymer electrolyte between the two transparent plies. The butyl rubber may also be applied in the form of a butyl rubber-backed metal foil tape, preferably an aluminum foil tape wide enough to overlap the front and back surfaces of the electrochromic cell, preferably by about 6.35 millimeters (1/4 inch). In a most preferred embodiment, after the polymer electrolyte sheet is laminated under heat and pressure between two glass sheets, a butyl rubber bead is applied about the perimeter covering the edge of the polymer electrolyte sheet. Then a butyl rubber-backed foil tape is applied over the butyl rubber bead. Preferred sealant compositions having moisture vapor transmission rates less than 8 grams per square meter per 24 hours per 0.0254 mm (mil) of thickness are disclosed in U S 4,109,431.

The present invention will be further understood from the description of specific examples which follow.

### EXAMPLE I

A polymer electrolyte sheet is prepared by casting from a solution of about 50 percent by weight in water of 2-acrylamido-2-methylpropane sulfonic acid (AMPS® monomer from Lubrizol Corp.). The polymer electrolyte is partially dehydrated in a controlled atmosphere of 23°C and 58 percent relative humidity to a final water/AMPS molar ratio of 3.6:1 in the controlled atmosphere. The preformed, preconditioned polymer electrolyte sheet can be assembled into a working electrochromic cell as in the following example.

### EXAMPLE II

A transparent electrochromic cell is prepared using two glass cell members. One glass substrate is clear 3 millimeter thick float glass. The other is 5 millimeter thick float glass coated with a tin oxide film having a resistivity of 25 ohms per square. The conductive tin oxide glass member functions as an electrode, with a silver frit bus bar applied about the periphery. An electrochromic tungsten oxide film, WO₃·yH₂O, wherein y represents the extent of hydration, is deposited over the conductive tin oxide film by resistive evaporation at an initial vacuum chamber pressure of about 4 x 10⁻⁶ Torr. The electrochromic tungsten oxide film is deposited to a thickness of about 4000 Angstroms. The electrochromic film/conductive film coated glass member is assembled with a preformed, preconditioned ion-conductive polymer sheet prepared as in Example I, a metal grid counterelectrode and an uncoated glass member. The metal grid counterelectrode is an electroformed copper square grid with 0.064 mm (0.0025 inch) lines at 8 lines per cm (20 lines per inch) spacing. This assembly is laminated in an air autoclave at about 93°C (200°F) at 10.34 . 10⁵ Pa (150 pounds per square inch) pressure for 60 minutes. After lamination, the perimeter of the cell is sealed with butyl tape. The aluminum foil-backed butyl tape is wide enough to cover the edge of the cell and overlap about 6.35 millimeters (1/4 inch) on both glass surfaces to maintain the optimized moisture content in the polymer electrolyte sheet. The electrochromic cell thus formed has a luminous transmittance of about 70 percent at a wavelength of 550 nanometers. When an electric current is applied across the cell at a superficial current density of about 0.05 milliamps per square centimeter, the electrochromic film darkens to 20 percent transmittance in about 2 minutes. When the polarity is reversed, the electrochromic film returns to its initial transmittance in about 2 minutes.

### EXAMPLE III

A reaction solution is prepared by dissolving 69.51 grams of 2-acrylamido-2-methylpropanesulfonic acid (AMPS® monomer from Lubrizol Corp.) in 70.00 grams of distilled water, and adding 0.49 gram of tetraethylene glycol dimethacrylate and 0.12 gram of benzoin methyl ether (0.60 milliliters of 20 percent solution in methanol). The solution is cast into a cell constructed of two plies of float glass measuring 12 inches (30.5 centimeters) square, spaced 0.020 inch (0.51 millimeter) apart, lined with polymer release layers (Mylar D® film from Dupont Corp.). The cell is sealed about the perimeter with butyl tape having two openings for 6.35 millimeter (1/4 inch) tubing, one for the solution to enter, the other for air to exit. The cell is exposed to ultraviolet radiation to cure the polymer. With illuminated power of 4 milliwatts per square centimeter and the peak of the ultraviolet spectrum at 365.4 nanometers, one side of the cell is exposed for 10 to 15 minutes, and the other side is exposed for 10 minutes. The glass sheets are then disassembled, and the copolymer electrolyte sheet is released from the Mylar film. The polymer electrolyte is partially dehydrated in a controlled atmosphere of 23°C and 58 percent relative humidity to a final water/copolymer molar ratio of 3.6:1 in the controlled atmosphere. The preformed, preconditioned copolymer electrolyte sheet can be assembled into a working electrochromic cell as in the previous example.

### EXAMPLE IV

A transparent electrochromic laminate is prepared using two glass members which are heated and shaped by gravity sag bending in a manner well known in the art. Glass substrate 24 is three millimeters thick, heat absorbing, uncoated, float glass available from PPG Industries under the tradename Solargray®. Glass substrate 14 is three millimeters thick clear float glass coated with a tin oxide film 16 having a sheet resistance of about 15 to 30 ohms per square. The electroconductive bus bar arrangement 32 includes 0.16 centimeters (1/16 inch) wide conductive adhesive backed copper strips 34 secured to the coated glass 16 and spaced approximately 3-1/2 inches 9 centimeters apart. An electrochromic film 18 of tungsten oxide WO₃·yH₂O, wherein y represents the extent of hydration, is deposited over tin oxide film 16 and bus bar arrangement 32 by magnetic sputtering. The electrochromic tungsten oxide film 18 is deposited to a uniform thickness of about 1600 Angstroms. A about 0.79 millimeter (0.031 inch) thick sheet of ion-conductive material 26 made from AMPS® monomer, available from Lubrizol Corp., Ohio, is placed over the tungsten oxide film 18. An electroformed copper grid 22 having a circular pattern with about 0.0635 mm (0.0025 inch) wide about 8 lines per centimeter (lines at 20 lines per inch) spacing is placed over the ion-conductive layer 26 and is overlaid by the second glass sheet 24 which includes a strip of copper tape along one edge to act as a terminal bus bar 30 for the metal grid 22. The entire assembly is then laminated to form a unitary structure and the edge of the laminate 10 is sealed, preferably with a butyl material seal 38 (shown only in Figure 2), to maintain the moisture content within the laminate.

The electrochromic laminate 10 thus formed has a luminous transmittance of about 50% at a wavelength of 550 nanometers. When an electric current is applied across the cell at a superficial current density of about 0.05 milliampere per square centimeter (0.32 milliampere per square inch) the electrochromic laminate darkens to 15% transmittance in about two minutes. When the polarity is reversed, the electrochromic film returns to its initial transmittance in about two minutes.

The above examples are offered only to illustrate the present invention. While the above example utilizes a tungsten oxide electrochromic film, any electrochromic material may be employed, such as transition metal oxides, transition metal sulfides, transition metal oxysulfides, transition metal halides, selenides, tellurides, chromates, molybdates, tungstates, vanadates, niobates, tantalates, titanates, stannates, etc., especially oxides, sulfides and stannates of metals of Groups IV-B, V-B and VI-B, and oxides and sulfides of Lanthanide Series metals, particularly, in addition to tungsten oxide, molybdenum oxide, titanium oxide, vanadium oxide, niobium oxide, cerium oxide, copper stannate, cobalt tungstate and various metal molybdates, titanates and niobates. Other electrochromic materials which reverse by short-circuiting or are effective only at elevated temperatures may also be employed, as well as organic materials such as polyaniline, polythiophene, polyisothianaphthene and polypyrrole. The ion-conductive layer may be chosen to be permeable to ions other than hydrogen, such as lithium, and may be formed by other methods, such as extrusion. The metal mesh counter electrode may comprise nickel or other metals or alloys as well as the preferred copper. The metal mesh counter electrode may be coated with another material in order to provide a particularly desired balancing half-cell reaction, i.e. at a potential lower than that of the electrolysis of water, e.g. nickel coated with tungsten oxide or niobium oxide. While electroforming is a preferred method for producing the counter electrode, any method which produces a grid with acceptable optical properties may be employed. The electrode in contact with the electrochromic material may also be in the form of a metal mesh, in which case the grid patterns of the two electrodes may be designed to complement each other or to provide particular optical properties.

## Claims

1. A laminated transparency in form of an electrochromic cell having variable transmittance in response to an electric field comprising:
a) a first transparent substrate (14);
b) a second transparent substrate (24) which in combination with said first transparent substrate (14) forms the walls of the electrochromic cell;
c) an electroconductive electrode member (16);
d) a transparent electrochromic film (18) in contact with said electroconductive electrode member (16);
e) a preformed, preconditioned ion-conductive copolymer sheet (26) which is prepared from 2-acrylamido-2-methylpropane sulfonic acid or a mixture of sulfonic acid monomer and hydrophilic acrylate monomer, in contact with said electrochromic film (18);
f) a metal grid counter electrode (22) in contact with said ionconductive polymer sheet (26)
characterized by
g) a current conducting means (32) having longitudinally extending bus bars (34) connected to a common terminal bus bar (36) in contact to said electroconductive electrode (16) at predetermined positions to more uniformly distribute current through said electrode (16).

2. The laminated transparency according to claim 1,
characterized in that
said bus bars (34) are a plurality of electroconductive strip members (34) in electrical contact with said film (16), said strip members (34) having a resistance less than the resistance of said electroconductive film (16), such that current flows through said strip members (34) to said film (16).

3. The laminated transparency according to claim 2,
characterized in that
said strip members (34) are secured to a major surface of said substrate (16) and extend in a generally longitudinally extending direction along said substrate (16).

4. The laminated transparency according to claim 3,
characterized in that
said strip members (34) are a metallic tape secured to said substrate.

5. The laminated transparency according to claim 4,
characterized in that
said metallic tape is a copper tape.

6. The laminated transparency according to claim 3,
characterized in that
said strip members (34) are an electroconductive ceramic enamel.

7. The laminated transparency according to any of claims 1-6, characterized in that
said electroconductive electrode member (16) is a transparent film selected from the group consisting of tin oxide, indium oxide and mixtures thereof.

8. The laminated transparency according to any of claims 1-7 characterized in that
said grid electrode (22) comprises a metal selected from the group consisting of nickel, copper and mixtures thereof.

9. The laminated transparency according to any of claims 1-8, characterized in that
said transparent electrochromic film (18) comprises an electrochromic material selected from the group consisting of transition metal oxides, transition metal sulfides, transition metal oxysulfides, transition metal halides, selenides, tellurides, chromates, molybdates, tungstates, vanadates, niobates, tantalates, titanates, stannates, polyaniline, polythiophene, polyisothianaphthene and polypyrrole.

10. The laminated transparency according to any of claims 1-9 characterized in that
said ion-conductive copolymer is the reaction product of a hydrophilic acrylate and a sulfonic acid monomer selected from the group consisting of 2-acrylamido-2-methylpropanesulfonic acid, ethylene sulfonic acid, vinyl sulfonic acid and mixtures thereof.

11. The laminated transparency according to claim 10,
characterized in that
the ion-conductive copolymer is the reaction product of sulfonic acid monomer and hydrophilic acrylate monomer selected from the group consisting of poly(ethylene oxide)dimethacrylate, ethoxytriethylene glycol methacrylate, ethylene oxide-dimethylsiloxane acrylate, hydroxypropyl acrylate, ethyl acrylate and mixtures thereof.

12. The laminated transparency according to any of claims 1-11, characterized in that
the ion-conductive copolymer sheet (26) is preconditioned to a water/monomer molar ratio in the range of 1.5-3.9:1.

13. The laminated transparency according to any of claims
1-12, characterized by
h) a moisture vapor barrier (38) surrounding the perimeter of said cell.

14. The laminated transparency according to claim 13,
characterized in that
said moisture vapor barrier (38) comprises butyl rubber.

15. The laminated transparency according to claim 14,
wherein said butyl rubber is in the form of a butyl rubber-backed metal foil tape.

16. The laminated transparency according to any of claims 1-15, characterized in that
said transparent substrate (14, 24) is glass.

## Patentansprüche

1. Laminierter, transparenter Gegenstand in Form einer elektrochromen Zelle mit einer variablen Durchlässigkeit in Abhängigkeit eines elektrischen Feldes, enthaltend:
a) ein erstes transparentes Substrat (14),
b) ein zweites transparentes Substrat (24), das in Kombination mit diesem ersten transparenten Substrat (14) die Wände der elektrochromen Zelle ausbildet,
c) ein elektrisch leitendes Elektrodenelement (16),
d) einen transparenten, elektrochromen Film (18), der in Kontakt mit diesem elektrisch leitenden Elektrodenelement (16) steht,
e) eine vorgeformte, vorkonditionierte, Ionen leitende Copolymerplatte (26), die aus einer 2-Acrylamido-2-methylpropansulfonsäure oder einer Mischung aus einem Sulfonsäuremonomer und einem hydrophilen Acrylatmonomer hergestellt ist, die in Kontakt mit diesem elektrochromen Film (18) steht,
f) eine gitterförmige Metallgegenelektrode (22), die in Kontakt mit dieser Ionen leitenden Polymerplatte (26) steht,
**gekennzeichnet durch**
g) eine Strom leitende Einrichtung (32) mit sich in Längsrichtung erstreckenden Stromschienen (34), die mit einer gemeinsamen endständigen Stromschiene (36) verbunden sind, die mit dieser elektrisch leitenden Elektrode (16) an vorbestimmten Positionen in Kontakt steht, um den Strom durch diese Elektrode (16) gleichförmiger zu verteilen.

2. Laminierter, transparenter Gegenstand nach Anspruch 1,
**dadurch gekennzeichnet**,
daß diese Stromschienen (34) eine Vielzahl von elektrisch leitenden Streifenelementen (34) sind, die in elektrischem Kontakt mit diesem Film (16) stehen, wobei diese Streifenelemente (34) einen Widerstand aufweisen, der geringer ist als der Widerstand dieses elektrisch leitenden Films (16), so daß der Strom durch diese Streifenelemente (34) zu diesem Film (16) fließt.

3. Laminierter, transparenter Gegenstand nach Anspruch 2,
**dadurch gekennzeichnet**,
daß diese Streifenelemente (34) auf einer Hauptoberfläche dieses Substrats (16) befestigt sind und sich in eine im allgemeinen längsorientierte Richtung entlang dieses Substrats (16) erstrecken.

4. Laminierter, transparenter Gegenstand nach Anspruch 3,
**dadurch gekennzeichnet**,
daß diese Streifenelemente (34) ein metallisches Band sind, die an diesem Substrat befestigt sind.

5. Laminierter, transparenter Gegenstand nach Anspruch 4,
**dadurch gekennzeichnet**,
daß dieses metallische Band ein Kupferband ist.

6. Laminierter, transparenter Gegenstand nach Anspruch 3,
**dadurch gekennzeichnet**,
daß diese Streifenelemente (34) ein elektrisch leitendes keramisches Email sind.

7. Laminierter, transparenter Gegenstand nach einem der Ansprüche 1-6,
**dadurch gekennzeichnet**,
daß dieses elektrisch leitende Elektrodenelement (16) ein transparenter Film ist, der aus der Gruppe, bestehend aus Zinnoxid, Indiumoxid und Mischungen davon, ausgewählt ist.

8. Laminierter, transparenter Gegenstand nach einem der Ansprüche 1-7,
**dadurch gekennzeichnet**,
daß diese Gitterelektrode (22) ein Metall, ausgewählt aus der Gruppe, bestehend aus Nickel, Kupfer und Mischungen davon, enthält.

9. Laminierter, transparenter Gegenstand nach einem der Ansprüche 1-8,
**dadurch gekennzeichnet**,
daß dieser transparente, elektrochrome Film (18) einen elektrochromen Stoff, ausgewählt aus der Gruppe, bestehend aus Übergangsmetalloxiden, Übergangsmetallsulfiden, Übergangsmetalloxysulfiden, Übergangsmetallhalogeniden, Seleniden, Telluriden, Chromaten, Molybdaten, Wolframaten, Vanadaten, Niobaten, Tantalaten, Titanaten, Stannaten, Polyanilin, Polythiophen, Polyisothianaphthen und Polypyrrol, enthält.

10. Laminierter, transparenter Gegenstand nach einem der Ansprüche 1-9,
**dadurch gekennzeichnet**,
daß dieses Ionen leitende Copolymer das Reaktionsprodukt eines hydrophilen Acrylats und eines Sulfonsäuremonomers, ausgewählt aus der Gruppe, bestehend aus 2-Acrylamido-2-methylpropansulfonsäure, Ethylensulfonsäure, Vinylsulfonsäure und Mischungen davon, ist.

11. Laminierter, transparenter Gegenstand nach Anspruch 10,
**dadurch gekennzeichnet**,
daß das Ionen leitende Copolymer das Reaktionsprodukt aus einem Sulfonsäuremonomer und einem hydrophilen Acrylatmonomer, ausgewählt aus der Gruppe, bestehend aus Poly(ethylenoxid)dimethacrylat, Ethoxytriethylenglykolmethacrylat, Ethylenoxid-Dimethylsiloxanacrylat, Hydroxypropylacrylat, Ethylacrylat und Mischungen davon, ist.

12. Laminierter, transparenter Gegenstand nach einem der Ansprüche 1-11,
**dadurch gekennzeichnet**,
daß die Ionen leitende Copolymerplatte (26) zu einem molaren Verhältnis von Wasser/Monomer im Bereich von 1,5-3,9:1 vorkonditioniert ist.

13. Laminierter, transparenter Gegenstand nach einem der Ansprüche 1-12,
**gekennzeichnet durch**
h) eine Barriere (38) gegen Feuchtigkeitsdampf, die den Umfang dieser Zelle umgibt.

14. Laminierter, transparenter Gegenstand nach Anspruch 13,
**dadurch gekennzeichnet**,
daß diese Barriere (38) gegen Feuchtigkeitsdampf Butylkautschuk enthält.

15. Laminierter, transparenter Gegenstand nach Anspruch 14, wobei dieser Butylkautschuk in Form eines Bandes aus einer mit Butylkautschuk kaschierten Metallfolie vorliegt.

16. Laminierter, transparenter Gegenstand nach einem der Ansprüche 1-15,
**dadurch gekennzeichnet**,
daß dieses transparente Substrat (14,24) Glas ist.

## Revendications

1. Dispositif transparent stratifié présentant la forme d'une cellule électrochrome dont la transmittance varie en réponse à un champ électrique, comprenant:
a) un premier support transparent (14);
b) un deuxième support transparent (24) qui, en combinaison avec ledit premier support transparent (14), forme les parois de la cellule électrochrome;
c) un élément d'électrode électroconductrice (16);
d) un film électrochrome transparent (18) en contact avec ledit élément d'électrode électroconductrice (16);
e) une feuille préformée (26) d'un copolymère préconditionné conducteur d'ions, qui est préparée à partir d'acide 2-acrylamido-2-méthylpropane sulfonique ou d'un mélange d'un monomère d'acide sulfonique et d'un monomère d'acrylate hydrophile, en contact avec ledit film électrochrome (18);
f) une contre-électrode métallique en grille (22), en contact avec ladite feuille polymérique conductrice d'ions (26),
caractérisée par
g) un moyen conducteur du courant (32) qui présente des barres collectrices (34) s'étendant longitudinalement, reliées à une barre collectrice terminale commune (36) en contact avec ladite électrode électroconductrice (16) en des positions prédéterminées, pour distribuer de manière plus homogène le courant à travers ladite électrode (16).

2. Dispositif transparent stratifié selon la revendication 1, caractérisé en ce que
lesdites barres collectrices (34) sont constituées de plusieurs éléments électroconducteurs en bande (34) en contact électrique avec ledit film (16), lesdits organes en bande (34) présentant une résistance inférieure à la résistance dudit film électroconducteur (16), de telle sorte que le courant s'écoule vers ledit film (16) à travers lesdits éléments en bande (34).

3. Dispositif transparent stratifié selon la revendication 2, caractérisé en ce que
lesdits éléments en bande (34) sont fixés sur une surface principale dudit support (16) et s'étendent suivant une direction généralement longitudinale dudit support (16).

4. Dispositif transparent stratifié selon la revendication 3, caractérisé en ce que
lesdits éléments en bande (34) sont constitués d'un ruban métallique fixé audit support.

5. Dispositif transparent stratifié selon la revendication 4, caractérisé en ce que
ledit ruban métallique est un ruban de cuivre.

6. Dispositif transparent stratifié selon la revendication 3, caractérisé en ce que
lesdits éléments en bande (34) sont constitués d'un vernis céramique électroconducteur.

7. Dispositif transparent stratifié selon l'une quelconque des revendications 1 à 6, caractérisé en ce que
ledit élément d'électrode électroconductrice (16) est un film transparent choisi dans le groupe constitué de l'oxyde d'étain, de l'oxyde d'indium et de mélanges de ceux-ci.

8. Dispositif transparent stratifié selon l'une quelconque des revendications 1 à 7, caractérisé en ce que
ladite électrode en grille (22) comprend un métal choisi dans le groupe constitué du nickel, du cuivre et de mélanges de ceux-ci.

9. Dispositif transparent stratifié selon l'une quelconque des revendications 1 à 8, caractérisé en ce que
ledit film électrochrome transparent (18) comprend un matériau électrochrome choisi dans le groupe constitué d'oxydes de métaux de transition, de sulfures de métaux de transition, d'oxysulfures de métaux de transition, d'halogénures de métaux de transition, de séléniures, de tellurures, de chromates, de molybdates, de tungstates, de vanadates, de niobates, de tantalates, de titanates, de stannates, de polyaniline, de polythiophène, de polyisothianaphtène et de polypyrrole.

10. Dispositif transparent stratifié selon l'une quelconque des revendications 1 à 9, caractérisé en ce que
ledit copolymère conducteur d'ions est le produit de réaction d'un acrylate hydrophile et d'un monomère d'acide sulfonique choisi dans le groupe constitué de l'acide 2-acrylamido-2-méthylpropane sulfonique, de l'acide éthylène sulfonique, de l'acide vinyle sulfonique et de mélanges de ceux-ci.

11. Dispositif transparent stratifié selon la revendication 10, caractérisé en ce que
le copolymère conducteur d'ions est le produit de réaction d'un monomère d'acide sulfonique et d'un monomère d'acrylate hydrophile choisi dans le groupe constitué du poly(diméthacrylate d'oxyde d'éthylène), du méthacrylate d'éthoxytriéthyléneglycol, de l'acrylate d'oxyde d'éthylénediméthylsiloxane, de l'acrylate d'hydroxypropyle, de l'acrylate d'éthyle et de mélanges de ceux-ci.

12. Dispositif transparent stratifié selon l'une quelconque des revendications 1 à 11, caractérisé en ce que
la feuille de copolymère conducteur d'ions (26) est préconditionnée dans un rapport molaire eau/monomère dans la plage de 1,5-3,9:1.

13. Dispositif transparent stratifié selon l'une quelconque des revendications 1 à 12, caractérisé par
h) une barrière contre les vapeurs d'humidité (38) entourant le périmètre de ladite cellule.

14. Dispositif transparent stratifié selon la revendication 13, caractérisé en ce que
ladite barrière contre les vapeurs d'humidité (38) comprend du caoutchouc de butyle.

15. Dispositif transparent stratifié selon la revendication 14, dans lequel ledit caoutchouc de butyle présente la forme d'un ruban constitué d'une feuille métallique à dos de caoutchouc de butyle.

16. Dispositif transparent stratifié selon l'une quelconque des revendications 1 à 15, caractérisé en ce que ledit support transparent (14, 24) est en verre.
